# EUROPEAN PATENT APPLICATION

(11) **EP 0 739 964 A2**
(43) Date of publication of application: **30.10.1996**
(21) Application number: 96106629.7
(22) Date of filing: 26.04.1996
(51) Int. Cl.: C09J 7/04, G09F 3/10

(54) **Refastenable signage sheet**

(30) Priority: 28.04.1995 JP 105310/95
(71) Applicant: MINNESOTA MINING AND MANUFACTURING COMPANY, St. Paul, Minnesota 55133-3427 (US)
(72) Inventor: Sugibuchi, Takashi, Setagaya-ku, Tokyo (JP)
(74) Representative: VOSSIUS & PARTNER

(57) **Abstract**

A refastenable signage sheet that includes a substrate sheet (101), a refastenable adhesive layer (102) on a portion of the rear surface of the substrate sheet adjacent one of its edges, a release agent layer (103) on a portion of the front surface of the substrate sheet (101) that that generally corresponds to the portion of the rear surface on which the refastenable adhesive layer (102) is positioned; and an ink barrier material layer (104) on a portion of the rear surface of the substrate sheet (101) other than the portion of that rear surface on which the refastenable adhesive layer (102) is positioned.

## Description

The present invention relates to a refastenable signage sheet.

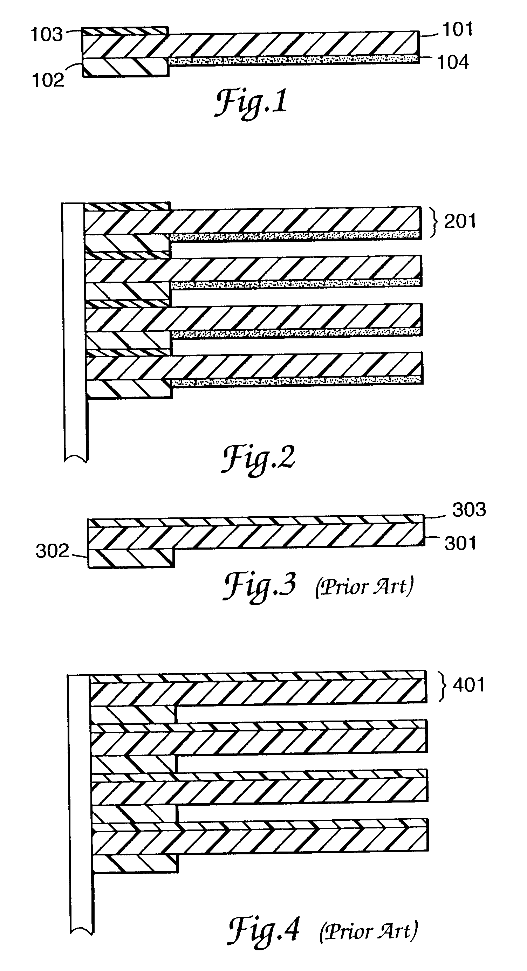

As shown in Fig. 3, a refastenable signage sheet comprising a substrate sheet 301 having front and rear surfaces and a refastenable adhesive layer 302 placed zonally at an end part adjacent to an edge of the rear surface is known to the public. Several tens of these sheets are usually stacked each other to provide a pad, as shown in Fig. 4.

Information is normally written on the front surface of the top substrate sheet 401 and this substrate sheet is then peeled off and applied for signage. In order to write information, a wide variety of writing utensils can be used depending on the user's liking. For example, one can use a writing utensil which affords high degree of permeation such as solvent-born pen, or a writing utensil having poor coloring property such as pencil. Accordingly, the substrate sheet should have good writing properties which prevent ink from bleeding through to its rear surface while having affinity for a water base ink and pencil that is equivalent to a paper substrate.

The refastenable adhesive layer on the rear surface of the substrate sheet is adapted to adhere the signage sheet to a surface and hold it on that surface. Thus, the refastenable adhesive layer should have adhesiveness enough to retain the substrate sheet continuously on that surface. However, if the adhesiveness is too strong, peeling the substrate sheet from the pad becomes difficult, which is not desirable.

In order to obtain a refastenable signage sheet having good writing properties and good release properties, the substrate sheet is usually subjected to various treatments. Most popularly, as shown in Fig. 3, the substrate sheet is treated by placing a resin layer 303 on the whole front surface of the substrate sheet.

Japanese Laid-Open Patent Publication No. 6-100846 discloses a refastenable signage sheet wherein the front surface of the substrate sheet is treated to improve the release properties and the rear surface is treated to prevent permeation.

The whole front surface of the substrate sheet is treated by coating it with a layer of a water-soluble polymer. Accordingly, the refastenable signage sheet disclosed therein is poor in writing properties when using a writing utensil that includes no water-soluble ink such as pencil, and is also poor in release properties.

Japanese Laid-Open Patent Publication No. 4-348176 discloses a refastenable signage sheet wherein the front surface of the substrate sheet is treated to improve both writing and release properties. The whole front surface of the substrate sheet is treated by placing a layer of vinyl chloride-vinyl acetate copolymer resin, polyester resin or urethane resin, which resin contains a filler such as silica. The filler such as silica has poor dispersibility and tends to precipitate or agglomerate. Thereby, the refastenable signage sheet disclosed therein lacks in surface smoothness and transparency and is difficult to manufacture. Releasing and writing properties are also insufficient.

The present invention solves the above described conventional problems, and provides a refastenable signage sheet that has excellent writing and release properties and appearance.

According to the present invention, a refastenable signage sheet, having excellent writing and release properties and appearance is provided.

The invention will be described in detail in connection with the drawings, in which:
Fig. 1 is a schematic cross section illustrating one embodiment of a refastenable signage sheet of the present invention,
Fig. 2 is a schematic cross section illustrating one embodiment of a pad of refastenable signage sheets of the present invention,
Fig. 3 is a schematic cross section illustrating one embodiment of a conventional refastenable signage sheet,
Fig. 4 is a schematic cross section illustrating one embodiment of a pad of conventional refastenable signage sheets.

The present invention provides a refastenable signage sheet 201 comprising a substrate sheet 101 having front and rear surfaces and a refastenable adhesive layer 102 placed zonally at an end part adjacent to an edge of the rear surface; wherein the substrate sheet 101 has (a) a release agent layer 103 placed zonally at the end part of the front surface which is corresponding to the position of the refastenable adhesive layer, and (b) an ink barrier material layer 104 placed at the part other than the end part of the rear surface.

The substrate sheet used in the present invention is any substrate which has hitherto been used for the refastenable signage sheet. The substrate sheet is not particularly limited, and may be any material having function of such as identification and decoration as an article for writing and printing. Examples of the substrate sheet include paper materials such as fine paper, medium duty paper, rough paper and coat paper; plastic materials; materials obtained by depositing/laminating a metal foil on the above materials; materials obtained by stacking several kinds of these materials and the like.

The basis weight of the substrate sheet is suitably from 50 to 200 g/m². When the basis weight of the substrate sheet is smaller than 50 g/m², the mechanical strength becomes poor. On the other hand, when it exceeds 200 g/m², the substrate sheet becomes too heavy and the load to the adhesive on signage becomes large, so that the signage sheet is easily peeled off of a surface on which it is adhered.

The thickness of the substrate sheet is suitably from 10 to 100 µm. When the thickness of the substrate is smaller than 10 µm, the mechanical strength becomes poor and the ink bleeding to rear surface is liable to be arisen at the time of printing and writing. On the other hand, when it exceeds 100 µm, the handling becomes inconvenient, and the load to the adhesive on signage becomes large, so that the signage sheet is easily peeled off of a surface on which it is adhered.

The size of the substrate sheet is preferably large, such as 10 x 10 cm or more. Thereby, placing adhesive and surface printing becomes readily. For example, a large-area substrate sheet described in Japanese Utility Model Publication No. 6-500008, which has a length of from 20 to 30 cm and a width of from 20 to 30 cm and is referred to as an easel pad, is preferred.

The shape of the substrate sheet is not specifically limited. For example, it can be in the shape of a square, rectangle, circle, ellipse, diamond, animal, plant, vehicle, structure and the like. Further, in order to improve its utility, a substrate sheet having a hole as a handle can also be used.

The refastenable adhesive which can be used in the present invention is an adhesive material having refastenability, which has hitherto been used for the refastenable signage sheet. The refastenable adhesive layer is formed by placing the refastenable adhesive on the rear surface of the substrate sheet. The layer may be formed by any method known to those skilled in the art, such as hot-melt application, solution application and the like.

The position where the refastenable adhesive layer is placed is not specifically limited. For example, it can be placed on the whole rear surface of the sheet. Thereby, the large-area substrate sheet may be held firmly with the adhesive. For example, it is preferred that a refastenable adhesive layer 102 is placed zonally at the end part adjacent to an edge of the rear surface of a substrate sheet 101 and no adhesive layer is placed at the other region, as shown in Fig. 1. Thereby, it becomes easy to peel the sheet from the pad or from an article to which it is adhered, and its cost of manufacture is also reduced.

When using the large-area substrate sheet, the refastenable adhesive layer may be placed zonally along with two or three opposite sides or peripheral ends of the substrate sheet in order to retain the substrate sheet firmly on the surface to be adhered.

When the refastenable adhesive layer is placed on the substrate sheet, the amount of the refastenable adhesive is preferably from 1 to 100 g/m², particularly from 10 to 30 g/m². When the amount is smaller than 1 g/m², the adhesiveness becomes poor. On the other hand, when the amount exceeds 100 g/m², refastenability deteriorates and the placing procedure becomes difficult.

The refastenable adhesive is not particularly limited, and may be any material having an adhesiveness capable of retaining the substrate sheet on the surface to be adhered. The preferred refastenable adhesive has adhesiveness enough to adhere the large-area substrate sheet on a vertical surface to provide a sign. The refastenable adhesive preferably has an adhesiveness against fine paper of not less than 100 g/2.54 cm and not more than 500 g/2.54 cm, which is measured according to JIS-Z-0237.

For example, a refastenable adhesive described in Japanese Laid-Open Patent Publication No. 4-306281 can be used. This refastenable adhesive is a mixture of a fine particle having adhesiveness and a tacky binder. It is usually considered that the fine particle contributes to refastenability, and the tacky binder contributes to an adhesiveness in this kind of adhesive. The fine particle itself may be tacky or non-tacky if only it has a shape of a microsphere. When the fine particle has tackiness, adhesiveness of the refastenable adhesive is improved. When the fine particle is non-tacky, the cohesion force of the refastenable adhesive becomes high and elasticity is maintained for a long period of time.

The fine particle having tackiness can be produced by suspension polymerizing an acrylic monomer described in U.S. Patent No. 3,691,140 in an aqueous or organic solvent. Further, as the non-tacky fine particle, there can be used a polymer particle such as a polystyrene particle, and an inorganic particle such as a glass particle and a titanium oxide particle.

The average particle size of the fine particle is preferably from 10 to 300 µm, particularly from 30 to 100 µm. When it is smaller than 10 µm, refastenability becomes poor. On the other hand, when it exceeds 300 µm, adhesiveness becomes poor.

Japanese Laid-Open Patent Publication No. 4-306281 mentioned above discloses a latex adhesive as the adhesive binder of the refastenable adhesive layer, however, a solvent type adhesive can also be used as the tacky binder. As the material of these binders, there can be used those which are usually employed for an adhesive tape, and examples thereof include acrylic, urethane, SBR, polyester and rubber resins. Particularly preferred material for the tacky binder is an acryl resin which is easily formulated with fine particles, and which has a high adhesiveness and low cost.

The solvent used for polymerizing and applying the adhesive binder may be an aqueous or organic solvent, and examples thereof include water, ethanol, toluene, methyl ethyl ketone, ethyl acetate and the like.

The release agent used in the present invention is any resin material which has hitherto been used for the refastenable sheet in order to increase release properties of the adhesive. The release agent layer can be formed by placing the release agent on the front surface of the substrate sheet.

The position where the release agent layer is placed is not particularly limited, and may be any area covering a part which contacts with the refastenable adhesive layer when the refastenable signage sheets are stacked to form a pad. For example, it may be placed on the whole surface or placed zonally along with the peripheral end. However, the position where the release agent layer is placed is preferably limited to the part which contacts with the refastenable adhesive when the refastenable signage sheets are stacked to form a pad. Thereby, the region which may affects writing properties of the front surface of the substrates sheet is minimized. For example, as shown in Fig. 1, the release layer 103 can be placed zonally at the end part of the front surface of a substrate sheet 101, which is corresponding to the position of the refastenable adhesive layer 102.

When the release agent layer is placed on the substrate sheet, the amount of the release agent is preferably from 0.01 to 1.0 g/m², particularly from 0.03 to 0.6 g/m². When the amount is smaller than 0.01 g/m², the release properties become poor. on the other hand, when the amount exceeds 1.0 g/m², the release agent layer may peel off from the substrate sheet.

The release agent is not specifically limited, and may be any material which makes it possible to peel off the refastenable adhesive layer smoothly while maintaining refastenability when the material is placed on the front surface of the substrate sheet as the release agent layer and the refastenable adhesive layer is stacked thereon. it is preferred that the release agent has affinity with a water base ink and pencil equivalent to a front surface of the paper substrate sheet. Further, it is more preferred that the release agent is superior in transparency and compatibility and which affords a good appearance to the substrate sheet.

For example, a copolymer of a silicone resin and a vinyl resin can be preferably used. As the vinyl resin, there can be used (meth)acrylate, vinyl acetate, vinyl chloride-vinyl acetate, vinyl alcohol. Among them, (meth)acrylate is particularly preferred. Thereby, it becomes easy to write with a pencil. The silicone resin is defined as a resin having a siloxane bond. Among them, those having dimethylsiloxane as the main molecular chain are particularly preferred, because excellent release properties can be obtained by the presence of a small amount of them.

As the method for bonding chemically the vinyl resin with the silicone resin, there can be used a method of grafting an acrylic group into silicone resin or a method of copolymerizing a silicone monomer having a vinyl group with a (meth)acrylate monomer.

Examples of the silicone release agent which can be preferably used in the present invention include silicone release resin "X-62-2135" manufactured by Sinetsu Kagaku Co., Ltd., "SAIMAK US-270" manufactured by Toa Gosei Co., Ltd. and the like.

In addition, as the silicone release agent having both writing and release properties, diorganopolysiloxane containing a phenyl group in the molecular chain and a release silicone composition containing a dimethylsiloxane compound and a cellulose derivative, disclosed in Japanese Laid-Open Patent Publication No. 57-207646 are suitable. These also have an advantage of that having high adhesiveness to the substrate sheet. Further, an alkylene oxide polymer containing a reactive silicone functional group disclosed in Japanese Laid-Open Patent Publication No. 61-55178 is also suitable because of its particularly good writing properties. Furthermore, silicone polyimide disclosed in Japanese Laid-Open Patent Publication No. 2127430 is also preferred because of its excellent heat resistance.

These silicone release agents are usually produced by adding a catalyst such as platinum, titanates, organic tin compounds, amine compounds in order to improve the adhesiveness to the substrate sheet in an amount of from 0.1 to 5 parts by weight based on 100 parts by weight of the silicone release agent and conducting the curing reaction due to dehydration condensation.

The ink barrier material used in the present invention is a non-tacky film-forming resin material. The ink barrier material layer is formed by placing the ink barrier material on the rear surface of the substrate sheet. The layer formation can be conducted by any method known to those skilled in the art, such as solution application and the like.

The position where the barrier material layer is placed is not particularly limited, and may be any area covering a part of the rear surface where writing is conducted on the corresponding front surface. For example, it may be placed on the whole rear surface of the sheet. In that case, the refastenable sheet is placed on the ink barrier material layer. Preferably, as shown in Fig. 1, the ink barrier material layer 104 is placed on the part other than the refastenable adhesive layer 102 of the rear surface of a substrate sheet 101. In this case, a thickness of the substrate sheet may be reduced, and a material cost is also reduced.

When the ink barrier material layer is placed on the substrate sheet, an amount of the ink barrier material is suitably from 1 to 100 g/m². If the amount of the ink barrier material layer is smaller than 1 g/m², an effect of preventing the ink bleeding to rear surface is poor. On the other hand, when the amount exceeds 100 g/m², the thickness of the whole sheet becomes too large and, thereby, it becomes difficult to apply it.

The ink barrier material is not particularly limited, and may be any material which prevents ink bleeding through the substrate sheet to rear surface when the ink barrier material is placed on the rear surface of the substrate sheet as the ink barrier material layer. It is more preferred that this ink barrier material induces a rapid drying when writing the front surface of the substrate sheet and makes it possible to afford a reliable writing, printing and the like.

Examples of the ink barrier material include hydrophilic polymers which are particularly effective for writing with the water base ink, such as polyvinyl alcohol, polyvinyl formal, polyvinyl butyral, polyacrylic acid, cellulose; those which are particularly effective for writing with the oil base ink, such as a long chain alkyl group-containing acryl resin, an urethane resin, a high-density polyethylene resin.

### Examples

The following Examples and Comparative Examples further illustrate the present invention in detail but are not to be construed to limit the scope thereof. In the Examples and Comparative Examples, all "parts" and "percents" are by weight unless otherwise stated.

### Example 1

A release agent was prepared by mixing 100 parts of a silicone resin "X-62-2135" manufactured by Shinetsu Kagaku Co., Ltd and 4 parts of a platinum catalyst "PS-3" manufactured by Sinetsu Kagaku Co., Ltd. The resulting release agent was applied on the front surface of a rectangular fine paper having a front surface and a rear surface (length: 30 cm, width: 25 cm, basis weight: 68 g/m²) in width of 5 cm from the upper edge using a bar coater so that a coating weight after drying may becomes 1 g/m².

An ink barrier material (polyvinyl alcohol manufactured by Kuraray Co., Ltd.) was applied on the whole rear surface of a substrate sheet using a bar coater so that a coating weight after drying may becomes 20 g/m².

Then, 70 parts of an emulsion (average particle size of 50 µm, solid content of 60%) obtained by polymerizing 90 parts of isooctyl acrylate and 10 parts of acrylic acid in ethyl acetate; and 30 parts of a resin solution (average molecular weight of about 850,000, solid content of 30%) obtained by solution polymerizing 95 parts of isooctyl acrylate and 5 parts of acrylic acid by the use of 1% of AIBN as an initiator and ethyl acetate as a solvent at 65°C for 24 hours; was mixed to give a refastenable adhesive.

The resulting refastenable adhesive was applied on the rear surface of the substrate sheet in width of 5 cm from the upper edge using a bar coater so that a coating weight after drying may becomes 10 g/m² to give a refastenable signage sheet.

According to the same manner as that described above, 20 refastenable signage sheets were prepared and all sheets were stacked each other to give a pad. The release and writing properties of the resulting pad were evaluated according to the following operations. The results are shown in Table 1.

### Test of release properties

The 90 degree peel strength of the refastenable signage sheet from the pad was measured. The measurement was conducted according to JIS-Z-0237.

### Test of writing properties

The front surface of the refastenable signage sheet was written with a commercially available oil base ink pen ("Pentel pen N50" manufactured by Pentel Co., Ltd.), a water base ink pen ("Campus PM-30" manufactured by Kokuyo Co., Ltd.) and a pencil on the front surface of the sheet. The evaluation was conducted according to the following criteria.
Good: No cissing is observed;
poor: Some cissing is observed, impossible to write, hard to read letters, or letters are disappeared by rubbing with a finger.

### Test of ink bleeding to rear surface

The sheet obtained after writing with the same oil or water base ink pen as that used in the test of writing properties was observed from the back side, and was evaluated according to the following criteria.
Good: No bleeding is observed.
poor: Some bleeding is observed, or a hand is stained with ink on pressing the rear surface.

### Test of adhesiveness

The release agent layer is rubbed with a finger 50 times, and whether it was peeled off from the front surface of a sheet or not is evaluated according to the following criteria.
Good: No release agent is peeled off, or some release agent is peeled off;
poor: A release agent is remarkably peeled off.

### Test of peel adhesive force

The refastenable signage sheet was adhered on a sheet of fine paper and a sheet of polyester film, respectively, and the 180 degree peel strength was measured. The measurement was conducted according to JIS-Z-0237.

### Example 2

According to the same manner as that described in Example 1 except for using "SAIMAK US-270" manufactured by Toa Gosei Co., Ltd. as the release agent, a refastenable signage sheet was prepared and the evaluations were conducted. The results are shown in Table 1.

### Comparative Example 1

According to the same manner as that described in Example 1 except that "SILOFF 294" manufactured by Dow Corning Co. was used as the release agent and no ink barrier material layer was placed, a refastenable signage sheet was prepared and the evaluation was conducted. The results are shown in Table 1.

**Table 1**

| | Example 1 | Example 2 | Comp. Example 1 |
|---|---|---|---|
| Writing properties | | | |
| Water base ink | Good | Good | poor |
| Oil base ink | Good | Good | poor |
| Pencil | Good | Good | poor |
| Adhesiveness | Good | Good | Good |
| Ink bleeding | Good | Good | poor |
| Release properties | Good | Good | Good |

## Claims

1. A refastenable signage sheet comprising a substrate sheet (101) having front and rear surfaces with opposite edges, and a refastenable adhesive layer (102) on a portion of the rear surface adjacent one of said edges, wherein said signage sheet includes:
a release agent layer (103) on a portion of the front surface of said substrate sheet (101) that that generally corresponds to the portion of the rear surface on which the refastenable adhesive layer (102) is positioned; and
an ink barrier material layer (104) on a portion of the rear surface of said substrate sheet (101) other than the portion of said rear surface on which said refastenable adhesive layer (102) is positioned.

2. The refastenable signage sheet according to claim 1, wherein the refastenable adhesive is a mixture of a fine particle and a tacky binder, and has an adhesiveness against fine paper, which is measured according to JIS-Z-0237, of from 100 to 500 g/2.54 cm.

3. The refastenable signage sheet according to claim 1 or 2, wherein the release agent layer comprises a silicone resin.

4. The refastenable signage sheet according to claim 1 or 2, wherein the release agent layer comprises a copolymer of a silicone resin and a (meth)acryl resin.

5. The refastenable signage sheet according to any of claims 1 to 4, wherein the ink barrier material layer comprises at least one resin selected from the group consisting of a silicone resin, an urethane resin and a polyvinyl alcohol resin.
